# EUROPEAN PATENT APPLICATION

(11) **EP 4 618 567 A1**
(43) Date of publication of application: **17.09.2025**
(21) Application number: 23888139.5
(22) Date of filing: 10.11.2023
(51) Int. Cl.: H04N 21/482

(54) **COMPONENT TRIGGER METHOD AND APPARATUS FOR LIVE BROADCAST, AND DEVICE AND STORAGE MEDIUM**

(30) Priority: 10.11.2022 CN 202211407232
(71) Applicant: Beijing Zitiao Network Technology Co., Ltd., Beijing 100190 (CN)
(72) Inventor: XING, Duolai, Beijing 100028 (CN)
(74) Representative: Grünecker Patent- und Rechtsanwälte PartG mbB
(86) International application number: PCT/CN2023/131121
(87) International publication number: WO 2024/099454

(57) **Abstract**

Embodiments of the present disclosure provide a component triggering method, apparatus, device and storage medium for live streaming, comprising: receiving a live streaming message of a target live stream, the live streaming message characterizing a live streaming event occurring in a live streaming video played within the live stream; determining a corresponding target component based on the live streaming message of the target live stream, and triggering the target component on a live stream page of the target live stream, the target component being configured to implement a first interactive function for a target live streaming event occurring in the live streaming video played within the target live stream. Due to the continuous change of the live streaming event with game ongoing in the scenario of game event live streaming, the embodiments determine the corresponding target component based on the live streaming message characterizing the live streaming event, and the target component is displayed, so that the dynamic triggering of the component used for implementing the interactive function in the live stream page is implemented, thereby improving the triggering mode diversity and the triggering real-time performance of the component and improving the interaction effect between users in the live stream.

## Description

This application claims the benefit of Chinese Patent Application No.202211407232. X, entitled "COMPONENT TRIGGERING METHOD, APPARATUS, AND STORAGE MEDIUM FOR LIVE STREAMING", filed on November 10, 2022, the entirety of which is incorporated herein by reference.

### FIELD

Embodiments of the present disclosure relate to the technical field of Internet technology, in particular to a component triggering method, apparatus, device and storage medium for live streaming.

### BACKGROUND

In an application scenario of live streaming of a competition event, a user may enter a live stream of the game event through a live streaming application client running on a terminal device and watch a live streaming video of the competition event. To meet the interactive requirements of the user in the process of watching the competition event, various functional components for implementing interaction of the live streams are also set in the live streaming application client, and corresponding interactive activities and tasks are implemented by triggering the functional components.

However, in the prior art, the functional components in the live stream page are usually triggered based on manual operations of the server-side background, resulting in the problems of poor triggering real-time performance and poor interactive effect of components.

### SUMMARY

The embodiments of the present disclosure provide a component triggering method, apparatus, device and storage medium for live streaming, to overcome the problems of poor triggering real-time performance and poor interactive effect of components existing in the existing functional components.

In a first aspect, an embodiment of the present disclosure provides a component triggering method for live streaming, including: receiving a live streaming message of a target live stream, the live streaming message characterizing a live streaming event occurring in a live streaming video played within the live stream; and determining a corresponding target component based on the live streaming message of the target live stream, and triggering the target component on a live stream page of the target live stream, the target component being configured to implement a first interactive function for a target live streaming event occurring in the live streaming video played within the target live stream.

In a second aspect, an embodiment of the present disclosure provides an apparatus for live streaming page displaying, including: a receiving module, configured to receive a live streaming message of a target live stream, the live streaming message characterizing a live streaming event occurring in a live streaming video played within the live stream; and a display module, configured to determine a corresponding target component based on the live streaming message of the target live stream, and triggering the target component on a live stream page of the target live stream, the target component being configured to implement a first interactive function for a target live streaming event occurring in the live streaming video played within the target live stream.

In a third aspect, an embodiment of the present disclosure provides an electronic device, including: a processor, and a memory communicatively connected to the processor. The memory stores computer executable instructions. The processor executes the computer executable instructions stored in the memory to implement the component triggering method for live streaming according to the first aspect and various possible designs of the first aspect.

In a fourth aspect, an embodiment of the present disclosure provides a computer readable storage medium having stored computer executable instructions which, when executed by a processor, implement the component triggering method for live streaming according to the first aspect and various possible designs of the first aspect.

In a fifth aspect, an embodiment of the present disclosure provides a computer program product, including a computer program which, when executed by a processor, implements the component triggering method for live streaming according to the first aspect and various possible designs of the first aspect.

In the component triggering method, apparatus, device and storage medium for live streaming provided in the embodiments, a live streaming message of a target live stream is received, and the live streaming message characterizes a live streaming event occurring in a live streaming video played within the live stream. A corresponding target component is determined based on the live streaming message of the target live stream, the target component is triggered on a live stream page of the target live stream, and the target component is configured to implement a first interactive function for a target live streaming event occurring in the live streaming video played within the target live stream. Due to the continuous change of the live streaming event with game ongoing in the scenario of game event live streaming, the embodiments determine the corresponding target component based on the live streaming message characterizing the live streaming event, and the target component is displayed, so that the dynamic triggering of the component used for implementing the interactive function in the live stream page is implemented, thereby improving the triggering mode diversity and the triggering real-time performance of the component and improving the interaction effect between users in the live stream.

### BRIEF DESCRIPTION OF DRAWINGS

In order to more clearly illustrate the embodiments of the present disclosure or the technical solutions in the prior art, the accompanying drawings used in the description of the embodiments or the prior art will be briefly introduced below, and it will be apparent that the accompanying drawings in the following description are some embodiments of the present disclosure, and those skilled in the art may also obtain other accompanying drawings according to these accompanying drawings without creative efforts.
FIG. 1 is an application scenario diagram of a component triggering method for live streaming provided in an embodiment of the present disclosure;
FIG. 2 is a first schematic flowchart of a live streaming component triggering method for live streaming provided in an embodiment of the present disclosure;
FIG. 3 is a flowchart of a specific implementation of step S102 in the embodiment shown in FIG. 2;
FIG. 4 is a schematic structural diagram of an event identification in a live streaming message provided in an embodiment of the present disclosure;
FIG. 5 is a schematic diagram of a process of triggering an effect function provided in an embodiment of the present disclosure;
FIG. 6 is a schematic diagram of a process of triggering a resource transfer function provided in an embodiment of the present disclosure;
FIG. 7 is a second schematic flowchart of a component triggering method for live streaming provided in an embodiment of the present disclosure;
FIG. 8 is a schematic diagram of a process of determining and triggering a target component provided in an embodiment of the present disclosure;
FIG. 9 is a flowchart of a specific implementation of step S207 in the embodiment shown in FIG. 7;
FIG. 10 is a schematic diagram of a process of determining a target visual effect provided in an embodiment of the present disclosure;
FIG. 11 is a structural block diagram of a component triggering apparatus for live streaming provided in an embodiment of the present disclosure;
FIG. 12 is a schematic structural diagram of an electronic device provided in an embodiment of the present disclosure; and
FIG. 13 is a schematic diagram of a hardware structure of an electronic device provided in an embodiment of the present disclosure.

### DETAILED DESCRIPTION

In order to make the objectives, technical solutions and advantages of the embodiments of the present disclosure clearer, the technical solutions in the embodiments of the present disclosure will be clearly and completely described below with reference to the accompanying drawings in the embodiments of the present disclosure. All other embodiments obtained by those skilled in the art based on the embodiments of the present disclosure without creative efforts shall fall within the scope of the present disclosure.

The following describes an application scenario of an embodiment of the present disclosure.

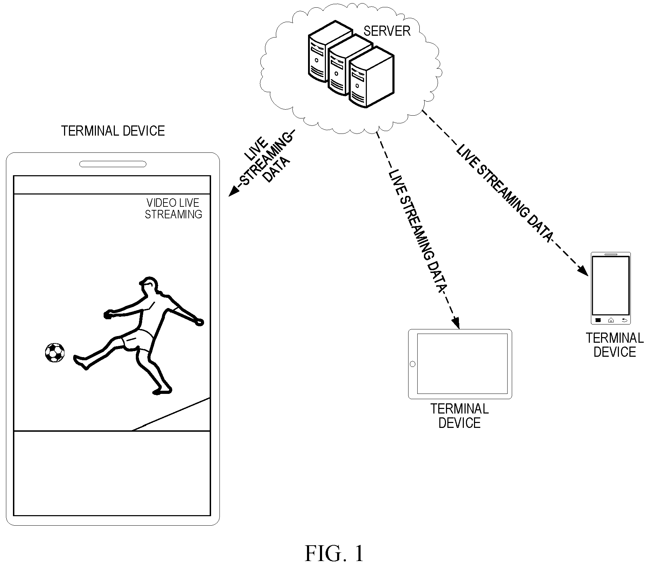

FIG. 1 is an application scenario diagram of a component triggering method for live streaming provided in an embodiment of the present disclosure. The component triggering method for live streaming by the embodiment of the present disclosure may be applied to an application scenario of game event live streaming. As shown in FIG. 1, the method provided in the embodiments of the present disclosure may be applied to a terminal device. The terminal device runs a client of a live streaming application. The terminal device communicates with a server running the live streaming service. The server sends live streaming data to the terminal device. The terminal device obtains the live streaming data and plays the live streaming data in a client page, to implement video live streaming of a sports event such as a football game, a basketball game, an electronic competition game, and the like. The live streaming application client is set with a component (invisible before triggering) for implementing an inter-user interaction. After the component is triggered, a particular activity task or a visual effect can be implemented, specifically, for example, a visual effect for "displaying fireworks", an activity task for sending "virtual points", and the like.

In addition, the component triggering method for live streaming provided in the embodiments of the present disclosure may further be applied to other live streaming application scenarios such as competitive content, adversarial content, or other content (e.g., streamer adversaries (PK)). The specific implementation may be adjusted based on a specific application scenario, and details are not described herein again.

In the prior art, the triggering of the foregoing components is usually implemented based on manual operations of the server-side background, that is, by manually operating the live streaming server side, a triggering instruction is sent to the client of the terminal device, and after receiving the triggering instruction, the client responds, to trigger a target component corresponding to the triggering instruction. However, in an application scenario such as a game event live streaming, various game events may occur randomly at any time in a live streaming game, such as a goal, a foul, and the like. According to the method for sending the triggering instruction through manual operation, the problem of poor real-time sending is present. Meanwhile, with the increase of the number of various components and the complexity of the triggering logic, the real-time performance is further reduced, resulting in the problems of the component triggering error and the diversity of the component triggering mode and influencing the interactive effect between users in the live stream.

The embodiment of the present disclosure provides a component triggering method for live streaming to solve the problem.

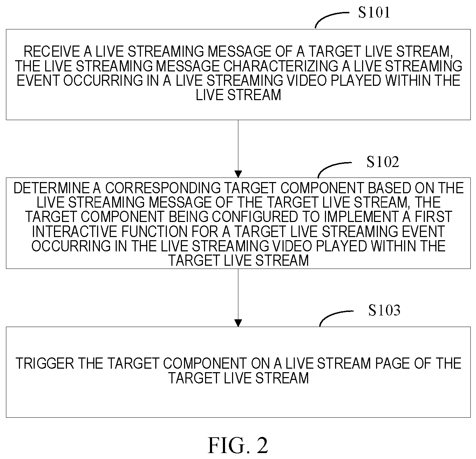

Referring to FIG. 2, which is a first schematic flowchart of a component triggering method for live streaming provided in an embodiment of the present disclosure. The method of this embodiment may be applied to a terminal device, and the component triggering method for live streaming includes the following steps.

At step S101: receive a live streaming message of a target live stream, the live streaming message characterizing a live streaming event occurring in a live streaming video played within the live stream.

For example, the executing body of the method provided in this embodiment may be a terminal device, for example, a smart phone. Referring to a schematic diagram of an application scenario shown in FIG. 1, a client of a live streaming application runs in the terminal device. After entering a target live stream through the client of the live streaming application, a live stream page of the target live stream is displayed in a display screen of the terminal device, and a live streaming video is displayed through the live stream page. Specifically, in an application scenario of game event live streaming, the live streaming message is a game message, the live streaming event is a game event, and the live streaming type corresponds to a game item. The live streaming video may be, for example, a game video, such as a football game video, a basketball game video, or the like.

Further, while playing the live streaming video through the live stream page, the terminal device receives the live streaming message sent on the side of the server (server side). In an application scenario of game event live streaming, the live streaming message is information that characterizes a live streaming event occurring in the live streaming video. In the application scenario of game event live streaming, the live streaming event is a game event and may specifically refer to a particular event that occurs in the game based on a game rule, for example, a start of a game, a goal, a foul, a middle field rest, and the like. In a possible implementation, the live streaming message includes an event identification, and the corresponding live streaming event is indicated by using the event identification.

Further, for example, the live streaming message may be included in a live streaming data (video stream) used to implement video live streaming. After receiving the live streaming data sent by the server, the terminal device parses the live streaming data to obtain the information characterizing the live streaming event occurring in the live streaming video, that is, the live streaming message. Further, the live streaming message is generated based on the content of the live streaming video on the side of the server (server side). Specifically, the live streaming message may be obtained after the server processes one or more video frames in the live streaming video based on image recognition and the like, and details are not described herein again. Therefore, the live streaming event characterized by the live streaming message and the content of the live streaming video are almost synchronous. Due to the high real-time performance of the live streaming message, the real-time performance of subsequently triggering the target component based on the live streaming message is effectively improved.

At step S102: determine a corresponding target component based on the live streaming message of the target live stream, the target component being configured to implement a first interactive function for a target live streaming event occurring in the live streaming video played within the target live stream.

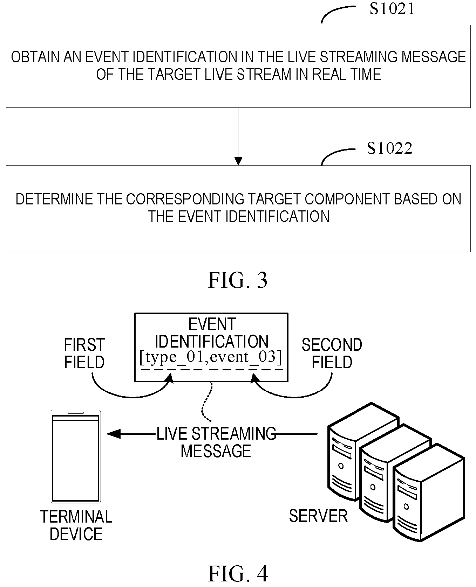

For example, after obtaining the live streaming message of the target live stream, the corresponding target component is determined based on the live streaming event indicated by the live streaming message of the target live stream. For example, the live streaming event and the target component have a predetermined mapping relationship. For example, if the live streaming event is "start of game", it corresponds to a target component A. If the live streaming event is "end of game", it corresponds to a target component B. In a possible implementation, the live streaming message includes an event identification characterizing a live streaming event. As shown in FIG. 3, a specific implementation of step S102 includes the following steps.

At step S1021: obtain an event identification in the live streaming message of the target live stream in real time.

At step S1022: determine the corresponding target component based on the event identification.

It may be understood that, for different live streaming types, the corresponding live streaming events are different. An application scenario of game event live streaming is used as an example, and the live streaming type corresponds to a game item, for example, a live streaming event including "first end" in the basketball game, and the football game does not include the live streaming event of the "first end". Therefore, the live streaming message characterizing the live streaming event has a corresponding relationship with the live streaming video currently played in the target live stream. In a possible implementation, the event identification includes a first field and a second field. The first field represents a live streaming type corresponding to the live streaming video, and the second field characterizes a live streaming event based on a live streaming type. FIG. 4 is a schematic structural diagram of an event identification in a live streaming message provided in an embodiment of the present disclosure. As shown in FIG. 4, for example, an event identification [type_01, event _03] is included in an example live streaming message, where "type _01" in the event identification is the first field, characterizing that the live streaming type is a "football game", and "event_03" in the event identification is the second field, characterizing that the live streaming event in the "football game" is a "handball foul". The first and second fields are separated by a predetermined symbol ",". The foregoing implementation of event identification is merely an example, and may be set as needed in a specific application.

In this embodiment, the event identification is configured through the first field and the second field, so that the event identification can accurately indicate the live streaming event in different live streaming types, so that when the target component is determined based on the event identification in the live streaming message, the accuracy of the determined target component and the reasonability of the applicable scenario of the target component are improved.

At step S103: trigger the target component on a live stream page of the target live stream.

Further, in a possible implementation, after the target component is determined, the target component may be directly triggered, to perform the function logic corresponding to the target component, that is, the first interactive function. The first interactive function includes an effect function or a resource transfer function. The effect function is configured to display a visual effect on the live stream page, and the resource transfer function is configured to transfer the virtual resource to a target user. The effect function and the resource transfer function are described in detail below, respectively.

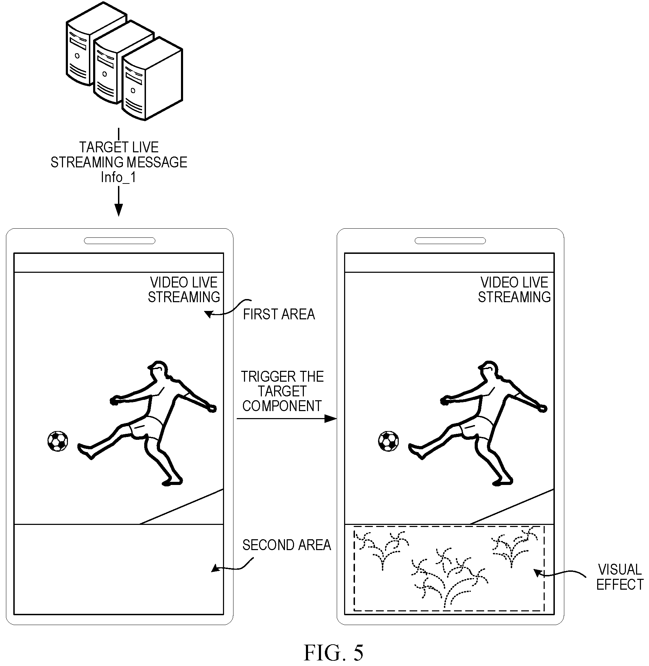

For example, the effect function refers to an effect texture mapping displayed on a live stream page, for example, a "firework" effect texture mapping, a "cheering team cheers" effect texture mapping, and the like. Optionally, the visual effect is a dynamic texture mapping generated based on a multi-frame image. Further, For example, the live stream page includes a first area for displaying a live streaming video and a second area for displaying a resident function component, for example, a "channel chat" component, a "team data" component, and the like, and details are not described herein again. For example, the effect function may be displayed in the first area of the live stream page or may be displayed in the second area. FIG. 5 is a schematic diagram of a process of triggering an effect function provided in an embodiment of the present disclosure. As shown in FIG. 5, based on the content of the live streaming video played in the target live stream, if a "goal event" occurs (the terminal device receives the target live streaming message Info1 corresponding to the goal event), the terminal device triggers the target component and displays the visual effect of "fireworks" in the second area of the live stream page, so that automatic triggering of the target component based on the live streaming message is implemented. Certainly, it may be understood that, in other possible embodiments, the visual effect of "fireworks" may also be displayed in the first area of the live stream page, and details are not described herein again.

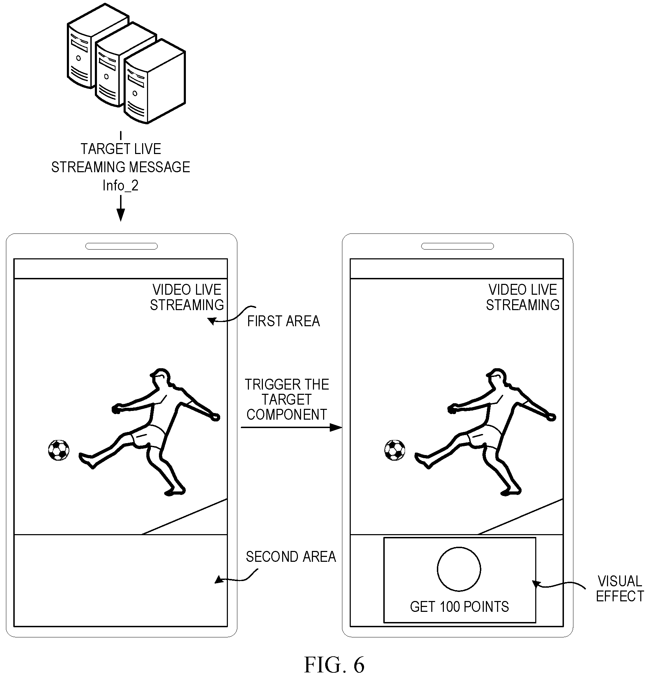

For example, if the first interactive function includes the resource transfer function, performing the corresponding first interactive function in response to the trigger for the target component includes: transferring the virtual resource to the target user in response to a trigger performed by the target user for the target component. FIG. 6 is a schematic diagram of a process of triggering a resource transfer function provided in an embodiment of the present disclosure. As shown in FIG. 6, based on the content of the live streaming video played in the target live stream, if a "goal event" occurs (the terminal device receives the target live streaming message Info_2 corresponding to the goal event), the terminal device triggers the target component to perform the resource transfer function, and transfers the virtual resources in the user account corresponding to the terminal device, such as increasing a target number of virtual points. More specifically, as shown in FIG. 6, after the target component is triggered, an icon or a texture mapping corresponding to the resource transfer function, for example, a texture mapping with a particular text or pattern, is displayed on the live stream page, and a corresponding illustrative text is displayed to notify the target user corresponding to the terminal device of a specific virtual resource transfer amount, for example, "get 100 points". At the same time, the virtual resource in the user account corresponding to the terminal device is transferred, for example, 100 points are added, thereby completing the process of performing the resource transfer function. The specific implementation of displaying the icon or the texture mapping corresponding to the resource transfer function on the live stream page may be specifically set as required, which is not described herein again.

In this embodiment, the live streaming message of the target live stream is received, and the live streaming message characterizes the live streaming event occurring in the live streaming video played within the live stream. The corresponding target component is determined based on the live streaming message of the target live stream, and the target component is triggered on the live stream page of the target live stream. The target component is configured to implement the first interactive function for the target live streaming event occurring in the live streaming video played within the target live stream. Due to the continuous change of the live streaming event with game ongoing in the scenario of game event live streaming, the embodiments determine the corresponding target component based on the live streaming message characterizing the live streaming event, and the target component is displayed, so that the dynamic triggering of the component used for implementing the interactive function in the live stream page is implemented, thereby improving the triggering mode diversity and the triggering real-time performance of the component and improving the interaction effect between users in the live stream.

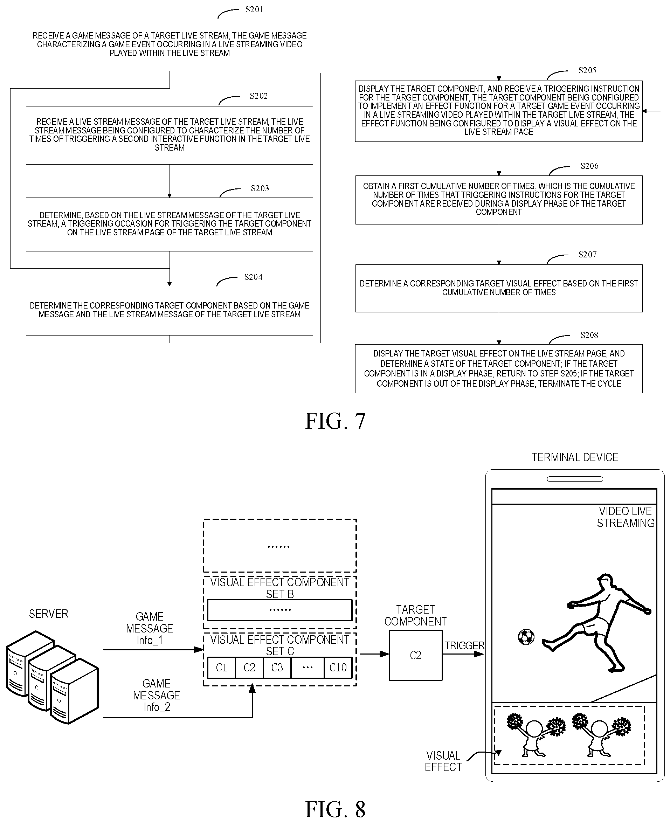

Referring to FIG. 7, which is a second schematic flowchart of a component triggering method for live streaming provided in an embodiment of the present disclosure. Based on the embodiment shown in FIG. 2, in this embodiment, step S102 is further refined. The component triggering method for live streaming is applied to an application scenario of game event live streaming. In the application scenario of game event live streaming, the live streaming message is a game message, the live streaming event is a game event, and the live streaming type corresponds to a game item. The method provided in this embodiment includes the following steps.

At step S201: receive a game message of a target live stream, the game message characterizing a game event occurring in a live streaming video played within the live stream.

At step S202: receive a live stream message of the target live stream, the live stream message being configured to characterize the number of times of triggering a second interactive function in the target live stream.

At step S203: determine, based on the live stream message of the target live stream, a triggering occasion for triggering the target component on the live stream page of the target live stream.

A specific implementation of receiving the game message at step S101 is described in detail in the embodiment shown in FIG. 2, and details are not described herein again.

Further, while receiving the game message, the live stream message of the target live stream is also received. In a possible implementation, the live stream message and the game message are similar, both may be included in the live streaming data and sent by the server (server side) to the terminal device (client). In another possible implementation, the live stream message may alternatively be sent separately from the live streaming data. That is, the server sends the live stream message to the terminal device according to a specific policy, for example, every fixed duration, so that the terminal device obtains the live stream message, and performs subsequent steps based on the live stream message.

Further, the live stream information characterizes the number of times of triggering a second interactive function in a target live stream for playing the live streaming video. The second interactive function is an interactive function triggered by a user in the live stream, excluding the first interactive function, for example, "like", "follow", "support the selected team", and the like. The second interactive function is implemented by a corresponding interactive component, and the number of times of triggering the second interactive function is the number of times that a user in the target live stream triggers the interactive component to perform "like" and "support the selected team" functions. Specifically, after a user in the target live stream sends a triggering instruction for the second interactive function through the terminal device, the server side records the triggering instruction, so as to count a total number of times of triggering the second interactive function in the target live stream, and generate the live stream message. After that, the terminal device determines, based on the live stream message (i.e., the number of times of triggering the second interactive function), the triggering occasion for triggering the target component on the live stream page of the target live stream is determined. More specifically, for example, if the number of times of triggering "like" (the second interactive function) reaches thirty thousand, the target component is triggered. Alternatively, if the number of times of triggering "user support" reaches ten thousand, the target component is triggered.

In this embodiment, the triggering occasion of the target component is determined through the live stream message, so that the triggering occasion of the target component can be dynamically determined by the interactive situation of users in the target live stream, the purpose of improving the interactive feedback in the live stream is achieved, and the interactive effect is improved.

At step S204: determine the corresponding target component based on the game message and the live stream message of the target live stream.

For example, further, on the basis of obtaining the live stream message, the corresponding target component is determined in combination with the game message and the live stream message. Specifically, for example, the corresponding game event is determined based on the event identification in the game message, then the corresponding component category is determined based on the game event. Then, the target component corresponding to the live stream message is selected from the component category corresponding to the game event based on the live stream message. FIG. 8 is a schematic diagram of a process of determining and triggering a target component provided in an embodiment of the present disclosure, and the foregoing process is described in detail below with reference to FIG. 8. As shown in FIG. 8, for example, first, based on the game message Info_1, the game event represented is: the second half of the football game begins. Based on the game event, it is determined that the corresponding component category is a visual effect component set C of "cheering team cheers". For example, in addition, the terminal device further includes a visual effect component set B characterizing "fireworks", and so on. Further, the visual effect component set C includes C1 to C10, and total 10 visual effect components are included. For example, after the visual effect component C1 is triggered, the visual effect of "1 cheering member cheers" is displayed. After the visual effect component C2 is triggered, the visual effect of "2 cheering member cheers" is displayed. The effects of the visual effect components C3 to C10 after being triggered are so on, and details are not described herein again.

Then, based on the live stream message Info_2, for example, the number of times of triggering currently "likes the game" function (the second interactive function), count_1 = 20,000, is obtained. Based on the number of times count_1, it is determined that the corresponding target component is the visual effect component C2 in the foregoing visual effect component set C. After the target component is triggered, the visual effect of "2 cheering member cheers" is displayed. Therefore, the purpose of jointly determining the target component based on the live stream message and the live streaming message is achieved, so that the more the number of times that the user "likes the game" in the target live stream, the more complex and gorgeous the visual effect is.

At the steps of this embodiment, the corresponding target component is determined by combining the game message and the live stream message of the target live stream, so that the specific implementation content of the target component is dynamically determined by the interactive situation of users in the target live stream, so that the purpose of improving the interactive feedback in the live stream is achieved, and the interactive effect is improved.

At step S205: display the target component, and receive a triggering instruction for the target component, the target component being configured to implement an effect function for a target game event occurring in a live streaming video played within the target live stream, the effect function being configured to display a visual effect on the live stream page.

At step S206: obtain a first cumulative number of times, which is the cumulative number of times that triggering instructions for the target component are received during a display phase of the target component.

At step S207: determine a corresponding target visual effect based on the first cumulative number of times.

At step S208, display the target visual effect on the live stream page, and determine a state of the target component; if the target component is in a display phase, return to step S205; if the target component is out of the display phase, terminate the cycle.

For example, further, in the embodiment shown in FIG. 2, after determining the target component, the target component is automatically triggered, and the corresponding first interactive function is executed. In this embodiment, after determining the target component, the target component is first displayed on the live stream page of the terminal device. After the terminal device receives a trigger for the target component by the user, the target component is triggered, and the corresponding first interactive function is performed. Specifically, the target component is configured to implement the effect function or the resource transfer function for the live streaming video, and a specific implementation of the effect function and the resource transfer function is described in the corresponding part in the embodiment shown in FIG. 2, and details are not described herein again.

In this embodiment, for a case in which the target component is configured to implement the effect function, for example, the target component is configured to implement a "firework effect" and a "cheering team cheers effect". After receiving, by the terminal device, a triggering instruction input by a user every time during a phase of displaying the target component, a cumulative number of times of all triggering instructions received during the phase of displaying the target component is calculated, that is, the first cumulative number of times. The phase of displaying corresponds to s a time period from appearance to disappearance of the target component on the live stream page, and the phase of displaying corresponds to a fixed display duration. More specifically, for example, after the target component meets a triggering condition, the target component appears on the live stream page and lasts for 10 seconds. Within 10 seconds, the user may trigger a corresponding first interactive function by operating the target component. After 10 seconds, the target component disappears, and the terminal device no longer receives a triggering instruction for the target component. The phase from the target component appearing to the target component disappearing is the phase for displaying.

Further, while the terminal device continuously receives the triggering instruction, the first cumulative number of times continues to increase. Correspondingly, the corresponding target visual effect is determined based on the first cumulative number of times, so that the target visual effect is continuously changed as the target component is continuously triggered by the user.

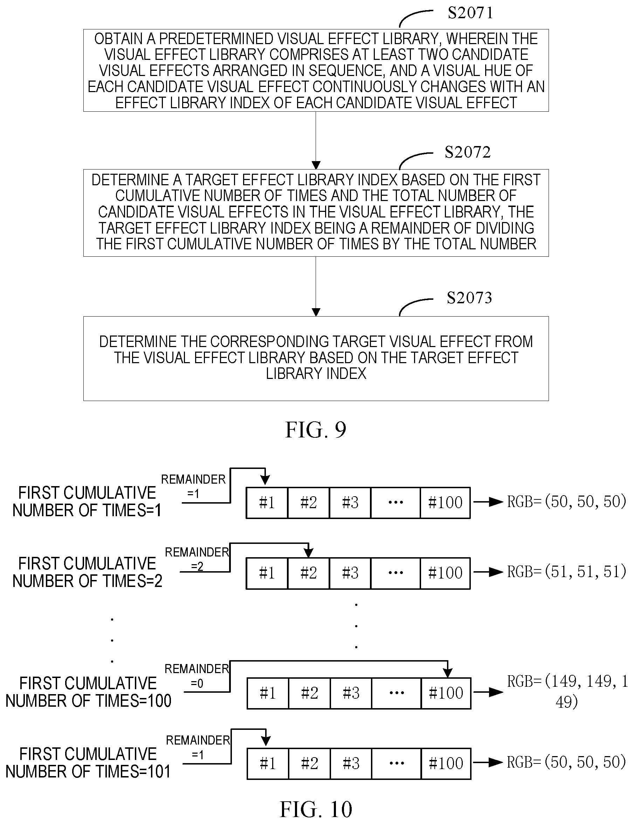

As shown in FIG. 9, in a possible implementation, a specific implementation of step S207 includes the following steps.

At step S2071: obtain a predetermined visual effect library, wherein the visual effect library comprises at least two candidate visual effects arranged in sequence, and a visual hue of each candidate visual effect continuously changes with an effect library index of each candidate visual effect.

At step S2072: determine a target effect library index based on the first cumulative number of times and the total number of candidate visual effects in the visual effect library, the target effect library index being a remainder of dividing the first cumulative number of times by the total number.

At step S2073: determine the corresponding target visual effect from the visual effect library based on the target effect library index.

For example, the visual effect library is a database for storing visual effect target types of visual effects, for example, a database of 100 "firework effects" of different colors. A plurality of candidate visual effects are stored in the visual effect library. Each candidate visual effect corresponds to one effect library index for positioning, and the effect library indexes continuous candidate visual effects, which are arranged in sequence based on visual hue. The visual hue refers to a relative brightness degree of an image and appears as color in color images. Therefore, the effect library indexes the visual hues corresponding to the continuous candidate visual effect and a continuously changing color spectrum is constituted.

More specifically, taking a "firework effect" as an example, the effect type stored in the visual effect library is a candidate visual effect of the "firework effect". The color of "firework" in the effect texture mapping continuously changes, that is, the RGB values continuously change, and visually appear as the "firework" changing continuously between the transition colors of red, yellow, blue and the foregoing colors.

Further, based on the obtained first cumulative number of times, divided by the total number of candidate visual effects in the visual effect library, the remainder is taken as the target effect library index characterizing the target visual effect. FIG. 10 is a schematic diagram of a process of determining a target visual effect provided in an embodiment of the present disclosure. As shown in FIG. 10, for example, the total number of candidate visual effects in the visual effect library is 100 (the effect library indices are from # 1 to # 100). If the first cumulative number of times is equal to 1, the remainder of the first cumulative number of times divided by the total number is equal to 1, that is, the target effect library index = # 1. That is, the first candidate visual effect in the visual effect library is taken as the target visual effect, and an RGB value corresponding to the target visual effect is (50, 50, 50). If the first cumulative number of times is equal to 2, the remainder of the first cumulative number of times divided by the total number is equal to 2, that is, the target effect library index = # 2. That is, the second candidate visual effect in the visual effect library is taken as the target visual effect, and an RGB value corresponding to the target visual effect is (51, 51, 51). By analogy, if the first cumulative number of times is equal to 100, the remainder of the first cumulative number of times divided by the total number is 0. At this time, the target effect library index is taken as the total number, the target effect library index = # 100, that is, the 100^{th} candidate visual effect in the visual effect library is taken as the target visual effect, and an RGB value corresponding to the target visual effect is (149, 149, 149). If the first cumulative number of times is equal to 101, the remainder of the first cumulative number of times divided by the total number is 1. At this time, the start position of the visual effect library is returned, the target effect library index is taken as # 1. That is, the first candidate visual effect in the visual effect library is taken as the target visual effect, and an RGB value corresponding to the target visual effect is (50, 50, 50), and the foregoing process is repeated.

**In** this embodiment, the visual effect library with the visual hues continuously changing is obtained, and polls are performed based on the first cumulative number of times, so as to sequentially determine the target visual effect with the hue continuously changing, so that in the process of continuously triggering the target component by the user, the visual effect corresponding to the target component can present continuous changes in color. On the one hand, the visual appeal is increased, and on the other hand, the purpose of prompting the number of times of the operation instruction input by the user can be achieved through continuous change in color, thereby improving the interactive feedback in the component triggering process and improving the interactive effect.

Optionally, in another possible implementation, the specific implementation of step S207 includes the following steps.

At step S2074: send the first cumulative number of times to a server, and obtain a second cumulative number of times fed back by the server, the second cumulative number of times being the cumulative number of times of triggering instructions for the target component input by a user in the target live stream within a second duration.

At step S2075: determine the corresponding target visual effect based on the second cumulative number of times.

For example, in another implementation, after obtaining the first cumulative number of times, the first cumulative number of times is sent to the server side, and the server side obtains the second cumulative number of times by counting the total number of times of triggering by respective users in the target live stream for the target component, and then returns the second cumulative number of times to the terminal device. The terminal device determines, based on the second cumulative number of times, a corresponding target visual effect, so that the specific implementation of the target visual effect is determined based on the first cumulative number of times contributed by all users in the live stream, to implement the dynamic change effect, for example, the more clicks, the darker the color of "fireworks" in the texture mapping of the firework effect, or the warmer the hue. The interactive feedback between users in the live stream is improved, and the interactive effect is improved.

Optionally, at step S2075, a specific implementation of determining the target visual effect based on the second cumulative number of times may refer to the specific implementation of determining the target visual effect based on the first cumulative number of times at steps S2071 to S2073, both implementation of which may be the same, and details are not described herein again.

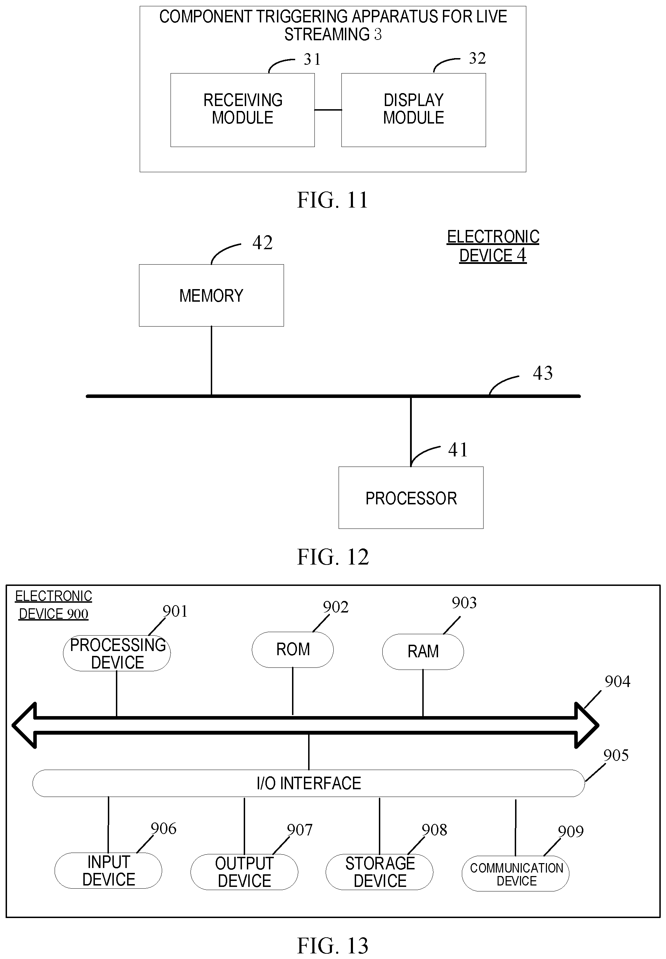

Corresponding to the component triggering method for live streaming in the foregoing embodiments, FIG. 11 is a structural block diagram of a component triggering apparatus for live streaming provided in an embodiment of the present disclosure. For ease of illustration, only portions related to the embodiment of the present disclosure are shown. Referring to FIG. 11, the component triggering apparatus 3 for live streaming includes the following modules.

The receiving module 31 is configured to receive a live streaming message of a target live stream, the live streaming message characterizing a live streaming event occurring in a live streaming video played within the live stream.

The display module 32 is configured to determine a corresponding target component based on the live streaming message of the target live stream and trigger the target component on a live stream page of the target live stream. The target component is configured to implement a first interactive function for a target live streaming event occurring in the live streaming video played within the target live stream.

In an embodiment of the present disclosure, when determining the corresponding target component based on the live streaming message of the target live stream, the display module 32 is specifically configured to: obtain an event identification in the live streaming message of the target live stream in real time, the event identification comprising a first field and a second field, wherein the first field represents a live streaming type corresponding to the live streaming video, and the second field characterizes a live streaming event based on the live streaming type; and determine the corresponding target component based on the event identification.

In an embodiment of the present disclosure, the receiving module 31 is further configured to: receive a live stream message of the target live stream, the live stream message being configured to characterize the number of times of triggering a second interactive function in the target live stream; when determining the corresponding target component based on the live streaming message of the target live stream, the display module 32 is specifically configured to determine the corresponding target component based on the live streaming message and the live stream message of the target live stream.

In an embodiment of the present disclosure, the display module 32 is further configured to determine, based on a live stream message of the target live stream, a triggering occasion for triggering the target component on the live stream page of the target live stream.

In an embodiment of the present disclosure, when the display module 32 triggers the target component on the live stream page of the target live stream, the display module 32 is specifically configured to perform the corresponding first interactive function in response to a trigger for the target component. The first interactive function includes an effect function or a resource transfer function, the effect function is configured to display a visual effect on the live stream page, and the resource transfer function is configured to transfer a virtual resource to a target user.

In an embodiment of the present disclosure, if the first interactive function includes the effect function, when performing the corresponding first interactive function in response to the trigger for the target component, the display module 32 is specifically configured to: obtain a first cumulative number of times, which is the cumulative number of times that triggering instructions for the target component are received during a phase of displaying the target component; and determine a corresponding target visual effect based on the first cumulative number of times, and displaying the target visual effect on the live stream page.

In an embodiment of the present disclosure, when the displaying module 32 determines the corresponding target visual effect based on the first cumulative number of times, the displaying module 32 is specifically configured to: a predetermined visual effect library, wherein the visual effect library comprises at least two candidate visual effects arranged in sequence, and respective visual hues of the candidate visual effects continuously change with respective effect library indexes of the candidate visual effects; determine a target effect library index based on the first cumulative number of times and the total number of candidate visual effects in the visual effect library, the target effect library index being a remainder of dividing the first cumulative number of times by the total number; and determine the corresponding target visual effect from the visual effect library based on the target effect library index.

In an embodiment of the present disclosure, when the display module 32 determines the corresponding target visual effect based on the first cumulative number of times, the display module 32 is specifically configured to: send the first cumulative number of times to a server, and obtaining a second cumulative number of times fed back by the server, the second cumulative number of times being the cumulative number of times of triggering instructions for the target component input by a user in the target live stream within a second duration; and determine the corresponding target visual effect based on the second cumulative number of times.

The receiving module 31 and the display module 32 are connected in sequence. The component triggering apparatus 3 for live streaming provided in this embodiment may perform the technical solutions of the foregoing method embodiments, and implementation principles and technical effects thereof are similar, and details are not described herein again in this embodiment.

FIG. 12 is a schematic structural diagram of an electronic device provided in an embodiment of the present disclosure. As shown in FIG. 12, the electronic device 4 includes: a processor 41, and a memory 42 communicatively connected to the processor 41. The memory 42 stores computer executable instructions. The processor 41 executes the computer executable instructions stored in the memory 42 to implement the component triggering method for live streaming in the embodiments shown in FIG. 2 to FIG. 10.

Optionally, the processor 41 and the memory 42 are connected by using a bus 43.

Related descriptions may be understood with reference to related descriptions and effects corresponding to the steps in the embodiments corresponding to FIG. 2 to FIG. 10, and details are not described herein again.

Referring to FIG. 13, which illustrates a schematic structural diagram of an electronic device 900 suitable for implementing the embodiments of the present disclosure, and the electronic device 900 may be a terminal device or a server. The terminal device may include, but is not limited to, a mobile terminal such as a mobile phone, a notebook computer, a digital broadcast receiver, a personal digital assistant (PDA), a portable Android device (PAD), a portable multimedia player (PMP), an in-vehicle terminal (for example, an in-vehicle navigation terminal), and a fixed terminal such as a digital TV, a desktop computer, or the like. The electronic device shown in FIG. 13 is merely an example and should not impose any limitation on the functions and scope of use of the embodiments of the present disclosure.

As shown in FIG. 13, the electronic device 900 may include a processing device (e.g., a central processor, a graphics processor, etc.) 901, which may perform various appropriate actions and processing based on a program stored in a read only memory (ROM) 902 or a program loaded into a random access memory (RAM) 903 from a storage device 908. In the RAM 903, various programs and data required by the operation of the electronic device 900 are also stored. The processing device 901, the ROM 902, and the RAM 903 are connected to each other through a bus 904. An input/output (I/O) interface 905 is also connected to bus 904.

Generally, the following devices may be connected to the I/O interface 905: an input device 906 including, for example, a touch screen, a touch pad, a keyboard, a mouse, a camera, a microphone, an accelerometer, a gyroscope, etc.; an output device 907 including, for example, a liquid crystal display (LCD), a speaker, a vibrator, etc.; a storage device 908 including, for example, a magnetic tape, a hard disk, etc.; and a communication device 909. The communication device 909 may allow the electronic device 900 to communicate wirelessly or wired with other devices to exchange data. Although FIG. 13 illustrates the electronic device 900 with various devices, it should be understood that it is not required to implement or have all illustrated devices. More or fewer devices may alternatively be implemented or equipped.

In particular, according to an embodiment of the present disclosure, the process described above with reference to the flowchart may be implemented as a computer software program. For example, an embodiment of the present disclosure includes a computer program product comprising a computer program embodied on a computer readable medium, the computer program comprising program code for performing the method shown in the flowchart. In such an embodiment, the computer program may be downloaded and installed from the network through the communication device 909, or installed from the storage device 908, or from the ROM 902. When the computer program is executed by the processing apparatus 901, the foregoing functions defined in the method of the embodiments of the present disclosure are performed.

It should be noted that the computer-readable medium described above can be a computer-readable signal medium or a computer-readable storage medium, or any combination thereof. The computer-readable storage medium can be, for example, but not limited to, an electrical, magnetic, optical, electromagnetic, infrared, or semiconductor system, apparatus, or device, or any combination thereof. The computer-readable storage media may include but are not limited to: an electrical connection with one or more wires, a portable computer disk, a hard disk, random access memory (RAM), read-only memory (ROM), an erasable programmable read only memory (EPROM or flash memory), an optical fiber, a portable compact disk read only memory (CD-ROM), an optical storage device, a magnetic storage device, or any combination thereof. In the present disclosure, a computer-readable storage medium may be any tangible medium containing or storing a program that can be used by an instruction execution system, apparatus, or device, or can be used in combination with an instruction execution system, apparatus, or device. In the present disclosure, a computer-readable signal medium can include a data signal propagated in baseband or as a carrier wave, the computer-readable signal medium carries computer-readable program code therein. Such propagated data signals may take many forms, including but not limited to electromagnetic signals, optical signals, or any combination thereof. A computer-readable signal medium may also be any computer-readable medium other than a computer-readable storage medium, which can send, propagate, or transmit programs for use by or in conjunction with instruction execution systems, apparatus, or devices. The program code contained on the computer-readable medium may be transmitted using any suitable medium, the medium includes but not limited to: wires, optical cables, RF (radio frequency), etc., or any combination thereof.

The computer readable medium may be included in the electronic device or may exist separately without being assembled into the electronic device.

The computer readable medium carries one or more programs. When the one or more programs are executed by an electronic device, the electronic device executes the method shown in the above embodiments.

Computer program codes for performing the operations of the present disclosure may be written in one or more programming languages or a combination thereof, including but not limited to Object Oriented programming languages - such as Java, Smalltalk, C++, and also conventional procedural programming languages - such as "C" or similar programming languages. The program code may be executed entirely on the user's computer, partially executed on the user's computer, executed as a standalone software package, partially executed on the user's computer and partially on a remote computer, or entirely on a remote computer or server. In the case of involving a remote computer, the remote computer may be any kind of network - including LAN or WAN - connected to the user's computer or may be connected to an external computer (e.g., through an Internet service provider to connect via the Internet).

The flowcharts and block diagrams in the accompanying drawings illustrate the architecture, functions, and operations of possible implementations of the system, method, and computer program product of various embodiments of the present disclosure. Each block in a flowchart or block diagram may represent a module, program segment, or portion of code that contains one or more executable instructions for implementing a specified logical function. It should also be noted that in some alternative implementations, the functions marked in the blocks may occur in a different order than those marked in the drawings. For example, two consecutive blocks may actually be executed in parallel, or they may sometimes be executed in reverse order, depending on the function involved. It should also be noted that each block in the block diagrams and/or flowcharts, as well as combinations of blocks in the block diagrams and/or flowcharts, may be implemented using a dedicated hardware-based system that performs the specified function or operations, or may be implemented using a combination of dedicated hardware and computer instructions.

The unit described in the embodiments of the present disclosure may be implemented by means of software or hardware. In some cases, the name of the module does not constitute a limitation on the module itself. For example, a first obtaining module may further be described as "a unit for obtaining at least two Internet Protocol addresses".

The functions described herein above can be performed at least in part by one or more hardware logic components. For example, without limitation, example types of hardware logic components that may be used include: a field programmable gate array (FPGA), an application specific integrated circuits (ASIC), an application specific standard part (ASSP), a system on chip (SOC), a complex programmable logic device (CPLD), and so on.

In the context of present disclosure, a machine-readable medium can be a tangible medium that may contain or store programs for use by or in conjunction with instruction execution systems, apparatuses, or devices. A machine-readable medium may be a machine-readable signal medium or a machine-readable storage medium. A machine-readable medium may include, but are not limited to, electronic, magnetic, optical, electromagnetic, infrared, or semiconductor systems, apparatuses, or devices, or any suitable combination thereof. Specific examples of the machine-readable storage medium may include electrical connections based on one or more wires, portable computer disks, hard disks, RAM, ROM, EPROM or flash memory, optical fibers, CD-ROM, optical storage devices, magnetic storage devices, or any combination thereof.

In a first aspect, according to one or more embodiments of the present disclosure, there is provided a component triggering method for live streaming, including: receiving a live streaming message of a target live stream, the live streaming message characterizing a live streaming event occurring in a live streaming video played within the live stream; and determining a corresponding target component based on the live streaming message of the target live stream, and triggering the target component on a live stream page of the target live stream, the target component being configured to implement a first interactive function for a target live streaming event occurring in the live streaming video played within the target live stream.

According to one or more embodiments of the present disclosure, determining the corresponding target component based on the live streaming message of the target live stream includes: obtaining an event identification in the live streaming message of the target live stream in real time, the event identification including a first field and a second field, wherein the first field represents a live streaming type corresponding to the live streaming video, and the second field characterizes a live streaming event based on the live streaming type; and determining the corresponding target component based on the event identification.

According to one or more embodiments of the present disclosure, the method further includes: receiving a live stream message of the target live stream, the live stream message being configured to characterize the number of times of triggering a second interactive function in the target live stream; determining the corresponding target component based on the live streaming message of the target live stream including: determining the corresponding target component based on the live streaming message and the live stream message of the target live stream.

According to one or more embodiments of the present disclosure, the method further includes: determining, based on a live stream message of the target live stream, a triggering occasion for triggering the target component on the live stream page of the target live stream.

According to one or more embodiments of the present disclosure, triggering the target component on the live stream page of the target live stream includes: performing the corresponding first interactive function in response to a trigger for the target component. The first interactive function includes an effect function or a resource transfer function, wherein the effect function is configured to display a visual effect on the live stream page, and the resource transfer function is configured to transfer a virtual resource to a target user.

According to one or more embodiments of the present disclosure, if the first interactive function includes the effect function, performing the corresponding first interactive function in response to the trigger for the target component includes: obtaining a first cumulative number of times, which is the cumulative number of times that triggering instructions for the target component are received during a phase of displaying the target component; determining a corresponding target visual effect based on the first cumulative number of times, and displaying the target visual effect on the live stream page.

According to one or more embodiments of the present disclosure, determining the corresponding target visual effect based on the first cumulative number of times includes: obtaining a predetermined visual effect library, wherein the visual effect library includes at least two candidate visual effects arranged in sequence, and respective visual hues of the candidate visual effects continuously change with respective effect library indexes of the candidate visual effects; determining a target effect library index based on the first cumulative number of times and the total number of candidate visual effects in the visual effect library, the target effect library index being a remainder of dividing the first cumulative number of times by the total number; and determining the corresponding target visual effect from the visual effect library based on the target effect library index.

According to one or more embodiments of the present disclosure, determining the corresponding target visual effect based on the first cumulative number of times includes: sending the first cumulative number of times to a server, and obtaining a second cumulative number of times fed back by the server, the second cumulative number of times being the cumulative number of times of triggering instructions for the target component input by a user in the target live stream within a second duration; and determining the corresponding target visual effect based on the second cumulative number of times.

In a second aspect, according to one or more embodiments of the present disclosure, there is provided a component triggering apparatus for live streaming, including: a receiving module, configured to receive a live streaming message of a target live stream, the live streaming message characterizing a live streaming event occurring in a live streaming video played within the live stream; and a display module, configured to determine a corresponding target component based on the live streaming message of the target live stream, and trigger the target component on a live stream page of the target live stream, the target component being configured to implement a first interactive function for a target live streaming event occurring in the live streaming video played within the target live stream.

According to one or more embodiments of the present disclosure, when determining the corresponding target component based on the live streaming message of the target live stream, the display module is specifically configured to: obtain an event identification in the live streaming message of the target live stream in real time, the event identification comprising a first field and a second field, wherein the first field represents a live streaming type corresponding to the live streaming video, and the second field characterizes a live streaming event based on the live streaming type; and determine the corresponding target component based on the event identification.

According to one or more embodiments of the present disclosure, the receiving module is further configured to: receive a live stream message of the target live stream, the live stream message being configured to characterize the number of times of triggering a second interactive function in the target live stream; when determining the corresponding target component based on the live streaming message of the target live stream, the display module is specifically configured to determine the corresponding target component based on the live streaming message and the live stream message of the target live stream.

According to one or more embodiments of the present disclosure, the display module is further configured to determine, based on a live stream message of the target live stream, a triggering occasion for triggering the target component on the live stream page of the target live stream.

According to one or more embodiments of the present disclosure, when the display module triggers the target component on the live stream page of the target live stream, the display module is specifically configured to perform the corresponding first interactive function in response to a trigger for the target component. The first interactive function includes an effect function or a resource transfer function, the effect function is configured to display a visual effect on the live stream page, and the resource transfer function is configured to transfer a virtual resource to a target user.

According to one or more embodiments of the present disclosure, if the first interactive function includes the effect function, when performing the corresponding first interactive function in response to the trigger for the target component, the display module is specifically configured to: obtain a first cumulative number of times, which is the cumulative number of times that triggering instructions for the target component are received during a phase of displaying the target component; and determine a corresponding target visual effect based on the first cumulative number of times, and displaying the target visual effect on the live stream page.

According to one or more embodiments of the present disclosure, when the displaying module determines the corresponding target visual effect based on the first cumulative number of times, the displaying module is specifically configured to: a predetermined visual effect library, wherein the visual effect library comprises at least two candidate visual effects arranged in sequence, and respective visual hues of the candidate visual effects continuously change with respective effect library indexes of the candidate visual effects; determine a target effect library index based on the first cumulative number of times and the total number of candidate visual effects in the visual effect library, the target effect library index being a remainder of dividing the first cumulative number of times by the total number; and determine the corresponding target visual effect from the visual effect library based on the target effect library index.

According to one or more embodiments of the present disclosure, when the display module determines the corresponding target visual effect based on the first cumulative number of times, the display module is specifically configured to: send the first cumulative number of times to a server, and obtaining a second cumulative number of times fed back by the server, the second cumulative number of times being the cumulative number of times of triggering instructions for the target component input by a user in the target live stream within a second duration; and determine the corresponding target visual effect based on the second cumulative number of times.

In a third aspect, an electronic device is provided according to one or more embodiments of the present disclosure, including: a processor, and a memory communicatively connected to the processor. The memory stores computer executable instructions. The processor executes the computer executable instructions stored in the memory to implement the component triggering method for live streaming according to the first aspect and various possible designs of the first aspect.

In a fourth aspect, a computer readable storage medium is provided according to one or more embodiments of the present disclosure. The computer readable storage medium stores computer executable instructions which, when executed by a processor, implement the component triggering method for live streaming according to the first aspect and various possible designs of the first aspect.

In a fifth aspect, an embodiment of the present disclosure provides a computer program product, including a computer program which, when executed by a processor, implements the component triggering method for live streaming according to the first aspect and various possible designs of the first aspect.

The above description is only for the preferred embodiments of the present disclosure and an explanation of the technical principles used. Those skilled in the art should understand that the scope involved in the present disclosure is not limited to technical solutions formed by specific combinations of the foregoing technical features and should also cover other technical solutions formed by any combinations of the foregoing technical features or their equivalent features without departing from the disclosed concept. For example, a technical solution is formed by replacing the above features with (but not limited to) technical features with similar functions disclosed in the present disclosure.

Furthermore, although operations are depicted in a specific order, this should not be understood as requiring that these operations be performed in the specific order shown or performed in a sequential order. In certain environments, multitasking and parallel processing may be advantageous. Likewise, although several specific implementation details are included in the above discussion, these should not be interpreted as limitations on the scope of present disclosure. Certain features described in the context of individual embodiments may also be combined to be implemented in a single embodiment. On the contrary, various features described in the context of a single embodiment may also be implemented separately or in any suitable sub combination in multiple embodiments.

Although the present subject matter has been described in language specific to structural features and/or methodological logical actions, it should be understood that the subject matter defined in the attached claims may not necessarily be limited to the specific features or acts described above. On the contrary, the specific features and actions described above are only example forms of implementing the claims.

## Claims

1. A component triggering method for live streaming, comprising:
receiving a live streaming message of a target live stream, the live streaming message characterizing a live streaming event occurring in a live streaming video played within the live stream;
determining a corresponding target component based on the live streaming message of the target live stream, and triggering the target component on a live stream page of the target live stream, the target component being configured to implement a first interactive function for a target live streaming event occurring in the live streaming video played within the target live stream.

2. The method of claim 1, wherein determining the corresponding target component based on the live streaming message of the target live stream comprises:
obtaining an event identification in the live streaming message of the target live stream in real time, the event identification comprising a first field and a second field, wherein the first field represents a live streaming type corresponding to the live streaming video, and the second field characterizes a live streaming event based on the live streaming type;
determining the corresponding target component based on the event identification.

3. The method of claim 1, further comprising:
receiving a live stream message of the target live stream, the live stream message being configured to characterize the number of times of triggering a second interactive function in the target live stream;
determining the corresponding target component based on the live streaming message of the target live stream comprising:
determining the corresponding target component based on the live streaming message and the live stream message of the target live stream.

4. The method of claim 2, further comprising:
determining, based on a live stream message of the target live stream, a triggering occasion for triggering the target component on the live stream page of the target live stream.

5. The method of claim 1, wherein triggering the target component on the live stream page of the target live stream comprises:
displaying the target component, and performing the corresponding first interactive function in response to a trigger for the target component;
wherein the first interactive function comprises an effect function or a resource transfer function, wherein the effect function is configured to display a visual effect on the live stream page, and the resource transfer function is configured to transfer a virtual resource to a target user.

6. The method of claim 5, wherein in accordance with that the first interactive function comprises the resource transfer function, performing the corresponding first interactive function in response to the trigger for the target component comprises:
in response to a trigger for the target component by the target user, transferring the virtual resource to the target user.

7. The method of claim 5, wherein in accordance with that the first interactive function comprises the effect function, performing the corresponding first interactive function in response to the trigger for the target component comprises:
obtaining a first cumulative number of times, which is the cumulative number of times that triggering instructions for the target component are received during a phase of displaying the target component;
determining a corresponding target visual effect based on the first cumulative number of times, and displaying the target visual effect on the live stream page.

8. The method of claim 7, wherein determining the corresponding target visual effect based on the first cumulative number of times comprises:
obtaining a predetermined visual effect library, wherein the visual effect library comprises at least two candidate visual effects arranged in sequence, and respective visual hues of the candidate visual effects continuously change with respective effect library indexes of the candidate visual effects;
determining a target effect library index based on the first cumulative number of times and the total number of candidate visual effects in the visual effect library, the target effect library index being a remainder of dividing the first cumulative number of times by the total number;
determining the corresponding target visual effect from the visual effect library based on the target effect library index.

9. The method of claim 7, wherein determining the corresponding target visual effect based on the first cumulative number of times comprises:
sending the first cumulative number of times to a server, and obtaining a second cumulative number of times fed back by the server, the second cumulative number of times being the cumulative number of times of triggering instructions for the target component input by a user in the target live stream within a second duration;
determining the corresponding target visual effect based on the second cumulative number of times.

10. A component triggering apparatus for live streaming, comprising:
a receiving module, configured to receive a live streaming message of a target live stream, the live streaming message characterizing a live streaming event occurring in a live streaming video played within the live stream;
a display module, configured to determine a corresponding target component based on the live streaming message of the target live stream, and trigger the target component on a live stream page of the target live stream, the target component being configured to implement a first interactive function for a target live streaming event occurring in the live streaming video played within the target live stream.

11. An electronic device, comprising: a processor; and a memory communicatively connected to the processor;
the memory storing computer executable instructions;
the processor executes the computer executable instructions stored in the memory to implement the component triggering method for live streaming according to any of claims 1 to 9.

12. A computer readable storage medium having stored computer executable instructions which, when executed by a processor, implement the component triggering method for live streaming according to any of claims 1 to 9.

13. A computer program product, comprising a computer program which, when executed by a processor, implements the component triggering method for live streaming according to any of claims 1 to 9.
